(19) Europäisches Patentamt
European Patent Office
Office européen des brevets

(11) EP 0 978 172 B1

(12) EUROPÄISCHE PATENTSCHRIFT

(45) Veröffentlichungstag und Bekanntmachung des Hinweises auf die Patenterteilung:
**11.10.2000 Patentblatt 2000/41**

(51) Int Cl.[7]: **H04H 1/00**, G11B 20/18

(21) Anmeldenummer: 98914886.1

(22) Anmeldetag: **13.03.1998**

(86) Internationale Anmeldenummer:
**PCT/EP98/01487**

(87) Internationale Veröffentlichungsnummer:
**WO 98/48531 (29.10.1998 Gazette 1998/43)**

(54) **VERFAHREN ZUM VERSCHLEIERN VON FEHLERN IN EINEM AUDIODATENSTROM**

METHOD FOR MASKING DEFECTS IN A STREAM OF AUDIO DATA

PROCEDE DE MASQUAGE DES ERREURS DANS UN COURANT DE DONNEES AUDIO

(84) Benannte Vertragsstaaten:
**AT BE CH DE DK FR GB IE IT LI NL SE**

(30) Priorität: **23.04.1997 DE 19717133**
**18.08.1997 DE 19735675**

(43) Veröffentlichungstag der Anmeldung:
**09.02.2000 Patentblatt 2000/06**

(73) Patentinhaber: **FRAUNHOFER-GESELLSCHAFT ZUR FÖRDERUNG DER ANGEWANDTEN FORSCHUNG E.V.**
**80636 München (DE)**

(72) Erfinder:
• **SCHILDBACH, Wolfgang**
**D-90419 Nürnberg (DE)**
• **HERRE, Jürgen**
**D-91054 Buckenhof (DE)**
• **SIELER, Martin**
**D-91207 Lauf (DE)**
• **BRANDENBURG, Karlheinz**
**D-91054 Erlangen (DE)**
• **GERHÄUSER, Heinz**
**D-91344 Waischenfeld (DE)**

(74) Vertreter: **Schoppe, Fritz, Dipl.-Ing. et al**
**Schoppe, Zimmermann & Stöckeler Patentanwälte**
**Postfach 71 08 67**
**81458 München (DE)**

(56) Entgegenhaltungen:
EP-A- 0 574 288      EP-A- 0 591 842
EP-A- 0 609 300      DE-A- 4 111 131
DE-A- 4 208 995      DE-A- 19 640 825
US-A- 5 025 404

• DATABASE INSPEC INSTITUTE OF ELECTRICAL ENGINEERS, STEVENAGE, GB Inspec No. 4387453, HERRE J ET AL: "Analysis tool for realtime measurements using perceptual criteria" XP002072685 & PROCEEDINGS OF THE AES 11TH INTERNATIONAL CONFERENCE. AES TEST AND MEASUREMENT CONFERENCE, PORTLAND, OH, USA, 29-31 MAY 1992, ISBN 0-937803-18-9, 1992, NEW YORK, NY, USA, AUDIO ENG. SOC, USA, Seiten 180-190, XP000300176
• STOLL G ET AL: "MASCAM: MINIMALE DATENRATE DURCH BERUCKSICHTIGUNG DER GEHOREIGENSCHAFTEN BEI DER CODIERUNG HOCHWERTIGER TONSIGNALE" FERNSEH UND KINOTECHNIK, HEIDELBERG, DE, Bd. 42, Nr. 11, November 1988, Seiten 551-556, 558, XP000001562
• D. WIESE: "Anwendung von Fehlerverschleierungstechniken für digitalen Hörrundfunk (DAB)" ITG-FACHBERICHT, VORTRÄGE DER ITG-FACHTAGUNG, Nr. 118, 18. - 20.Februar 1992, MANNHEIM, Seiten 113-122, XP002072684

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die vorliegende Erfindung bezieht sich auf Audiocodierverfahren und insbesondere auf Fehlerverschleierungstechniken beim Codieren von Audiosignalen.

Das sogenannte "Internet Radio Broadcasting", d. h. das Übertragen eines Radioprogramms live über das Internet, erfordert es, Tausende von Echtzeitverbindungen zwischen einem Sender und Empfängerprogrammen, die sich beispielsweise in einem Personalcomputer eines Internetteilnehmers befinden, aufzubauen.

Das derzeit am häufigsten verbreitete Internet-Protokoll http stellt eine fehlerfreie Übertragung sicher, dasselbe besitzt jedoch keine Echtzeiteigenschaften. Dieses Protokoll bedingt eine zur Anzahl der empfangenen Stationen proportionale Netzlast beim Sender. Somit ist die Anzahl der gleichzeitigen Hörer je nach Datenrate des codierten Signals typischerweise auf wenige Hundert begrenzt, was für "Rundfunkanwendungen", d. h. Anwendungen, bei denen Radio- oder Fernsehsignale übertragen werden sollen, sicher nicht ausreicht.

Neue Protokolle zur Übertragung von Daten über das Internet, wie z. B. rtp (rtp = realtime transmission protocol = Echtzeitübertragungsprotokoll), umgehen diesen Flaschenhals, indem sie im Gegensatz zu dem Protokoll http Fehler in der Übertragung zulassen.

Dadurch stellt sich für den Empfänger das Problem, wie er mit fehlerhaften Übertragungsdaten umgehen soll. Wie wird beispielsweise das Fehlen von Teilen eines Multimedia- oder Audiodatenstroms überbrückt?

Zur Fehlerbehandlung sind im Stand der Technik einige Verfahren bereits bekannt. Beim Verfahren des Stummschaltens, welches die einfachste Art der Fehlerverschleierung ist, wird die Wiedergabe abgeschaltet, solange Daten fehlen oder fehlerhaft sind. Die fehlenden Daten werden durch ein Nullsignal ersetzt. Aufgrund psychoakustischer Effekte wird dieses plötzliche Abfallen und Ansteigen der Signalenergie als sehr unangenehm empfunden. Ein Stummschaltverfahren ist beispielsweise in Detlef Wiese: "Error Concealment Strategies for Digital Audio Broadcasting", 92. AES Convention, Wien 1992, Preprint 3264, und in Detlef Wiese: "Anwendung von Fehlerverschleierungstechniken für digitalen Hörrundfunk (DAB)", 9. ITG-Fachtagung "Hörrundfunk", Mannheim 2/92, beschrieben.

Ein weiteres bekanntes Verfahren ist das Verfahren der Datenwiederholung. Fällt ein Datenstrom aus, wird ein Teil der zuletzt gesendeten Daten in einer Schleife wiederholt. Bei blockorientierten Verfahren, welche die Mehrheit bekannter Audiocodierverfahren sind, würden also beispielsweise der oder die zuletzt empfangenen Blöcke wiederholt. Ein derartiges Verfahren ist aus den bereits zitierten Literaturstellen bekannt.

Dieses Verfahren führt jedoch zu störenden Artefakten: Werden nur kurze Teile des Audiosignals wiederholt, so klingt das repetierte Signal - unabhängig vom Originalsignal - maschinenartig mit einer Grundfrequenz bei der Wiederholfrequenz. Werden längere Teile wiederholt, entstehen "Echoeffekte", die ebenfalls als störend empfunden werden.

Ein weiteres Verfahren, das Verfahren der Dateninterpolation, baut auf der Wahrscheinlichkeit auf, daß bei Übertragung eines Datenstroms mit relativ hoher Verzögerung bereits wieder gültige Audiodaten vorliegen, wenn eine Fehlerlücke des Audiodatensignals verschleiert werden muß. Es kann eine Interpolation verwendet werden, um Daten in der Lücke zu generieren, wie es in Laurent Filliat, Mario Rossi, Joseph Maisano, "Error Correction by Interpolation in Digital Audio", 92. AES Convention, Wien 1992, Preprint 3281, beschrieben ist.

Ein Nachteil dieses Verfahrens besteht beispielsweise darin, daß die Verzögerung in vielen Fällen nicht hinnehmbar ist, insbesondere, wenn an Telefonieanwendungen gedacht wird.

Bei blockorientierten Transformationscodierern/Decodierern kann die Signalenergie pro Spektrallinie von einem Block auf den nächsten vorhergesagt oder "prädiziert" werden. Dieses bekannte Verfahren (Jürgen Herre: "Fehlerverschleierung bei spektral codierten Audiosignalen", Dissertation, Universität Erlangen-Nürnberg, Erlangen 1995) führt zwar zu einer guten Fehlerverschleierung, es ist jedoch ein relativ hoher Rechenaufwand vonnöten, der derzeit eine Echtzeitdecodierung eines empfangenen Multimedia- oder Audiodatensignals unmöglich macht.

In der Technik ist es ebenfalls bekannt, die Redundanz im Datenstrom zu erhöhen. Es ist möglich, in einen Audiodatenstrom bereits beim Codierer oder Sender einen zweiten Datenstrom einzufügen, der dasselbe Signal (bei eventuell niedrigerer Datenrate und entsprechend niedrigerer Qualität) überträgt. Versetzt man diesen zweiten Datenstrom zeitlich gegenüber dem ersteren, so ist es wahrscheinlich, daß zu jedem Zeitpunkt wenigstens aus einem der beiden Ströme gültige Daten empfangen werden. Somit kann der Ausfall eines Signals durch das andere Signal überbrückt werden. Dieses Verfahren liefert bei fehlerhaftem Hauptsignal eine informationstreue Wiedergabe, die jedoch üblicherweise eine schlechtere Qualität haben wird.

Wie auch das vorhergehende Verfahren erhöht dieses Verfahren die Verzögerung zwischen Sender und Empfänger, weshalb die gleichen Nachteile wie bei der Dateninterpolation vorhanden sind. Weiterhin wird die Datenrate erhöht, da ja ein zweites gewissermaßen identisches Signal übertragen wird, was insbesondere bei kleinen Datenraten oder verfügbaren Übertragungsbandbreiten nicht akzeptabel sein kann.

Bei der Übertragung eines Stereosignals existiert ein weiteres Verfahren, um Fehler in der Übertragung zu verschleiern. Bei dem Verfahren der Links/ Rechts-Ersetzung kann der gestörte oder ausgefallene Kanal durch den jeweils anderen Kanal ersetzt werden, wie es in Detlef Wiese: "Error Concealment Strategies for Digital Audio Broadcasting", 92. AES Convention, Wien 1992, Preprint 3264, Detlef Wiese: "Anwendung von Fehlerverschleierungstechniken für digitalen Hörrundfunk (DAB)", 9. ITG-Fachtagung "Hörrundfunk", Mannheim 2/92, und Jürgen Herre: "Fehlerverschleierung bei spektral codierten Audiosignalen", Dissertation, Universität Erlangen-Nürnberg, Erlangen 1995, beschrieben ist. Im allgemeinen werden jedoch die Daten für beide Kanäle gleichzeitig übertragen und daher auch gleichzeitig gestört. Andernfalls handelt es sich hier um einen Spezialfall zum Verfahren der Erhöhung der Redundanz im Datenstrom. Dieses Verfahren kann ferner nur dann angewendet werden, wenn der linke und der rechte Kanal unabhängig voneinander decodierbar sind. Es ist jedoch beispielsweise bei den sogenannten "Joint Stereo"-Modi, die durch den Standard-MPEG Layer-3 definiert sind, nicht möglich.

Die Aufgabe der vorliegenden Erfindung besteht darin, ein Verfahren zum Verschleiern von Fehlern in einem Audiodatenstrom zu schaffen, das eine effektive und möglichst nicht hörbare Fehlerverschleierung erreicht.

Diese Aufgabe wird durch ein Verfahren gemäß Anspruch 1 gelöst.

Das Verfahren zum Verschleiern von Fehlern in einem Audiodatenstrom gemäß der vorliegenden Erfindung umfaßt folgende Schritte:

Erfassen des Auftretens eines Fehlers in einem Audiodatenstrom, wobei Audiodaten vor Auftreten des Fehlers intakte Audiodaten sind;

Berechnen einer spektralen Energie in einer Untergruppe der intakten Audiodaten;

Bilden einer Vorlage für Ersatzdaten aufgrund der für die Untergruppe der intakten Audiodaten berechneten spektralen Energie; und

Erzeugen der Ersatzdaten für fehlerhafte oder nicht vorhandene Audiodaten, die der Untergruppe entsprechen, aufgrund der Vorlage.

Eine Untergruppe im Sinne dieser Anmeldung umfaßt jeweils mehrere aufeinanderfolgende Frequenzlinien. Der Frequenzbereich wird also in aufeinanderfolgende Untergruppen eingeteilt, wobei jede Untergruppe aufeinanderfolgende Frequenzlinien hat. Vorzugsweise können die Untergruppen den aus der Psychoakustik bekannten Frequenzgruppen entsprechen. Es kann jedoch auch eine von den Frequenzgruppen abweichende Einteilung für die Untergruppen gewählt werden, wie es weiter hinten beschrieben ist.

Wie es aus der späteren detaillierten Beschreibung offensichtlich wird, löst dieses Verfahren im Stand der Technik vorhandene Nachteile, da es weder eine erhöhte Verzögerung noch eine Erhöhung der Datenrate, d. h. eine Änderung der Quellencodierung erfordert, noch die unangenehme Zeit- und Frequenz struktur eines einfach repetierten Signalabschnitts aufweist. Im Gegensatz beispielsweise zum Verfahren der spektralen Prädiktion, das bereits umrissen wurde, liefert das erfindungsgemäße Verfahren eine gehörangepaßte Rauschsubstitution. Ausgegangen wird von einer Frequenzdarstellung eines zeitlichen Audiosignals, welche auf viele für Fachleute bekannten Arten und Weisen erhalten werden kann. Wie es von Zwicker und Fastl in "Psychoacoustics, Facts and Models", 1990, dargelegt wurde, kann das Spektrum eines Signals in sogenannte Frequenzgruppen gruppiert werden. Dies führt zu einer Skalierung der Frequenzachse in Bark, welche gehörrelevante Eigenschaften berücksichtigt, und zwar im Gegensatz zu einer üblichen Skalierung der Frequenzachse in Hertz. Ein Bark ist die Frequenzdifferenz zwischen benachbarten Frequenzgruppen. Eine Frequenzgruppe ist, wie es von Zwicker definiert wurde, die maximale Bandbreite, innerhalb der die Intensitäten einzelner Töne durch das menschliche Ohr summiert werden, um Hörschwellen zu bilden.

Der vorliegenden Erfindung liegt die Erkenntnis zugrunde, daß es für eine Fehlerverschleierung ausreicht, ein "gut" spektral geformtes Zufallssignal zu erzeugen. "Gut" bedeutet in diesem Zusammenhang, daß die spektralen Energien in Frequenzgruppen des Zufallssignals mit den spektralen Energien der intakten Audiodaten vor Auftreten des Fehlers übereinstimmen bzw. von denselben hergeleitet sind.

Bevor auf verschiedene Ausführungsbeispiele der vorliegenden Erfindung eingegangen wird, werden weitere Begriffe, die für das Verständnis der Erfindung wesentlich sind, kurz erläutert.

Wenn in dieser Anmeldung von einer "spektralen Energie" einer Frequenzlinie die Rede ist, so wird darunter das Betragsquadrat dieser beispielsweise durch eine Fourier-Transformation errechneten Spektralkomponente verstanden. Wenn dagegen von der "spektralen Energie" einer Untergruppe gesprochen wird, so wird darunter die Summe der quadrierten Beträge der Spektralkomponenten in dieser Untergruppe verstanden, welche beispielsweise durch eine Fourier-Transformation errechnet worden sind. Wichtig ist jedoch, anzumerken, daß der Ausdruck "spektrale Energie" nicht völlig streng verwendet wird. Wird beispielsweise das Verfahren der vorliegenden Erfindung in einem Codierer ausgeführt, der nach MPEG Layer-3 arbeitet, so läuft das Verfahren auf der Basis von MDCT-Linien (MDCT = modifizierte diskrete Cosinus Transformation) ab. Die dort verwendete modifizierte diskrete Cosinus Transformation, welche eine Überlappung und Fensterung beinhaltet, ist jedoch im strengen Sinne nicht energieerhaltend. Das bedeutet, daß es keinen einfachen Weg gibt, aus MDCT-Spektren die Energie pro Frequenzlinie im Sinne beispielsweise einer Fourier-Transformation zu finden. Umgekehrt ist es bei Kenntnis dieser Energie nicht ohne weiteres möglich, ein MDCT-Spektrum zu erzeugen, das die geforderte Energie enthält. Der Ausdruck "spektrale Energie" bezieht sich also sowohl auf die energieerhaltende Fourier-Transformation als auch auf die "nicht"-energieerhaltende modifizierte diskrete Cosinus Transformation oder auf ähnliche nicht-energieerhaltende Transformationsverfahren, welche bekannt sind. Die Nützlichkeit des Verfahrens gemäß der vorliegenden Erfindung hängt allerdings auch nicht von einer genauen Energieerhaltung ab, da das Verfahren zum Verschleiern von Fehlern in einem Audiodatenstrom gerade nicht eine exakte Wiederherstellung der Ursprungsdaten, welche im allgemeinen nicht möglich ist, sondern eben eine Abschätzung von Ersatzdaten betrifft, die bewirken, daß ein aufgetretener Fehler möglichst unhörbar und damit verschleiert wird.

Weiterhin wird in dieser Anmeldung öfters von Audiodaten vor Auftreten des Fehlers oder von intakten Audiodaten gesprochen. Es sei angemerkt, daß sich diese Ausdrücke nicht auf den eigentlichen Empfangsprozeß beispielsweise eines vom Internet lesenden Programmes bezieht. Bei manchen Internet-Protokollen können sequentiell abgeschickte Datenpakete in anderer Reihenfolge ankommen. Wird also von Audiodaten vor Auftreten eines Fehlers gesprochen, so wird damit nicht auf die Echtzeit Bezug genommen, sondern auf die durch den Audiodatenstrom vorgegebene Reihenfolge. Weiterhin sei angemerkt, daß Audiodaten vor Auftreten eines Fehlers selbstverständlich zu einem noch früheren Zeitpunkt ebenfalls fehlerhaft bzw. nicht vorhanden gewesen sein könnten. Wenn jedoch in einem Audiodatenstrom ein Fehler erfaßt wird, so bedeutet dies, daß auf jeden Fall vor Auftreten des Fehlers intakte Audiodaten vorhanden gewesen sind. Dies bedeutet also nicht, daß das Verfahren der vorliegenden Erfindung lediglich den allerersten Fehler in einem Audiodatenstrom behandeln kann.

Wie bereits erwähnt wurde, wird in dieser Anmeldung das unerwartete Nichtvorhandensein von Audiodaten ebenfalls wie das Vorhandensein von fehlerhaften, d. h. teilweise zerstörten, Audiodaten als Fehler bezeichnet. Wenn also fehlerhafte Audiodaten durch Ersatzdaten ersetzt werden, so bedeutet dies, daß entweder teilweise zerstörte Audiodaten durch Ersatzdaten ersetzt werden, oder daß an der Stelle, an der unerwarteterweise keine Audiodaten vorhanden sind, Ersatzdaten eingesetzt werden.

Wenn ferner in dieser Anmeldung davon gesprochen wird, daß aufgrund von intakten Audiodaten spektrale Energien berechnet werden, so soll dies nicht bedeuten, daß die gesamten intakten Audiodaten zwischen dem aktuellen und dem letzten Fehler verwendet werden. Stattdessen ist die Menge der intakten Audiodaten, die den Audiodatenstrom vor Auftreten des Fehlers darstellen, von dem einzelnen Anwendungsfall abhängig. Bei Ausführungsbeispielen der vorliegenden Erfindung, welche blockbasierend arbeiten, kann die Menge der intakten Audiodaten beispielsweise nur Audiodaten des letzten Blocks oder mehrerer letzter Blöcke umfassen. Ferner müssen nicht unbedingt alle intakten Audiodaten beispielsweise eines Blocks verwendet werden, sondern lediglich beispielsweise Audiodaten, die Informationen über Energien pro Untergruppe aufweisen. Eine Stärke des Verfahrens der vorliegenden Erfindung besteht ja gerade darin, daß nicht unbedingt alle Frequenzlinien gespeichert und im Fehlerfall prädiziert werden müssen. Je mehr Audiodaten jedoch zum Bilden einer Vorlage für Ersatzdaten verwendet werden, um so präziser können Ersatzdaten aus der spektralen Vorlage erzeugt werden, um einen Fehler besser zu verschleiern.

Im nachfolgenden wird das erfindungsgemäße Verfahren anhand eines Audiocodierverfahrens, das spektral codierte Audiodaten erzeugt und überträgt, beispielhaft dargestellt. Die meisten modernen Audiocodierverfahren, wie z. B. MPEG Layer 1-3, MPEG AAC, Dolby AC-3, PAC, liefern spektral codierte Audiodaten, welche von einem entsprechenden Decodierer empfangen, decodiert und wieder in den Zeitbereich umgesetzt werden.

Wie es allgemein bekannt ist, wird ein zu codierendes analoges Signal mit einer geeigneten Abtastfrequenz, wie z. B. 44,1 kHz, abgetastet, um ein diskretes Zeitsignal zu erhalten. Ein solches diskretes Zeitsignal kann nun mittels einer geeigneten Fensterfunktion gefenstert werden, um Blöcke mit einer bestimmten Anzahl von einzelnen zeitdiskreten Signalwerten zu erhalten, welche insbesondere zu den Rändern der Blöcke hin durch die Fensterfunktion gewichtet sind, wie es in der Nachrichtentechnik allgemein bekannt ist. Ein Block mit mittels einer Fensterfunktion gewichteten zeitdiskreten Signalen wird nun mittels eines geeigneten Transformationsverfahrens vom Zeitbereich in den Frequenzbereich transformiert. Geeignete Transformationsverfahren können eine schnelle Fouriertransformation (FFT), ein Filterbankverfahren oder eine modifizierte diskrete Cosinustransformation (MDCT) sein. Ein Block von zeitdiskreten Signalen liegt nach der Transformation als ein Block von Frequenz linien vor. Der Block von Frequenzlinien oder das Frequenzspektrum des Blocks von zeitdiskreten Signalwerten kann nun quantisiert werden. Unter Berücksichtigung psychoakustischer Gesichtspunkte ist es unter bestimmten Voraussetzungen möglich, eine durch die Quantisierung eingeführte Quantisierungsstörung derart zu gestalten, daß sie nicht hörbar ist, d. h. daß sie unter der Hörschwelle des menschlichen Gehörs liegt.

Bei modernen Audiocodierverfahren werden die nun in quantisierter Form vorliegenden Spektrallinien einer Redundanzreduktion, beispielsweise mittels einer Huffman-Codierung, unterzogen und zusammen mit zur Decodierung notwendigen Seiteninformationen in einen Audiodatenstrom gepackt, der nun zur Übertragung zu einem Empfänger bereitsteht.

An dieser Stelle sei angemerkt, daß der Ausdruck "Audiodatenstrom" in dieser Anmeldung nicht nur wie vorher beschrieben erzeugte Audiodatenströme erfaßt, sondern jegliche Form von Audiodaten, seien sie codiert oder uncodiert. So ist es für die vorliegende Erfindung nicht erforderlich, daß der Audiodatenstrom in gleichlange Blöcke oder überhaupt in Blöcke eingeteilt ist. Liegt der Audiodatenstrom jedoch spektral codiert in Blockform vor, so kann das erfindungsgemäße Verfahren mit geringstem Aufwand implementiert werden. Liegt der Audiodatenstrom in einer anderen Form vor, so können die Audiodaten mittels bekannter Schritte und Verfahren aufbereitet werden, um das erfindungsgemäße Verfahren durchzuführen.

Das Verfahren gemäß der vorliegenden Erfindung weist somit vier Schritte auf. Der erste Schritt besteht darin, das Auftreten eines Fehlers in einem Audiodatenstrom zu erfassen, der zweite Schritt und der dritte Schritt bestehen darin, eine spektrale Energie einer Untergruppe in den Audiodaten zu berechnen, die den Audiodatenstrom vor Auftreten des Fehlers darstellen, d. h. in den intakten Audiodaten, und dann eine Vorlage für Ersatzdaten aufgrund der für die Untergruppe der intakten Audiodaten berechneten spektralen Energien zu bilden. Der letzte Schritt besteht dann darin, Ersatzdaten für fehlerhafte oder nicht vorhandene Audiodaten aufgrund der Vorlage für die Untergruppe, für die die Vorlage gebildet ist, zu erzeugen.

Der erste Schritt besteht also im Erfassen des Auftretens eines Fehlers. Fällt der Eingangsdatenstrom weg oder weist er Fehler auf, welche mittels geeigneter Einrichtungen beispielsweise zum Überprüfen einer Prüfsumme oder ähnlichem in einem codierten Audiosignal erfaßt werden können, kann beispielsweise ein bestimmter Anteil der Daten vor Auftreten dieses Fehlers z. B. in einem Ringpuffer gespeichert werden.

Das Verfahren gemäß der vorliegenden Erfindung berechnet nun für jede Untergruppe die spektrale Energie. Während die bekannte Variante zur linienweisen Prädiktion typischerweise das 20- bis 30-fache an Speicher und Rechenoperationen im Vergleich zum Verfahren der vorliegenden Erfindung (wenn die Untergruppen den Frequenzgruppen entsprechen) benötigt, kann die spektrale Energie für jede Untergruppe gemäß der vorliegenden Erfindung effizient und sparsam berechnet werden. Es sei jedoch dennoch darauf hingewiesen, daß der genannte Speicher- und Rechenoperationsaufwand lediglich bezüglich der Fehlerverschleierung gilt. Die Gesamtkomplexität (Speicher oder Rechenzeit) beispielsweise eines kompletten MPEG-Layer-3-Decodierers nimmt in der Regel nicht wesentlich zu. Wird dagegen eine linienweise Prädiktion eingesetzt, so wird der Gesamtrechenaufwand des Codierers/Decodierers sehr wohl signifikant ansteigen.

Die spektrale Energie pro Untergruppe berechnet sich als Summe der Betragsquadrate der in der Untergruppe enthaltenen Spektralkomponenten. Die spektrale Energie pro Untergruppe entspricht also der Summe der quadrierten Linien in dieser Untergruppe. Dies gilt sowohl bei der Verwendung einer MDCT als auch bei der Verwendung einer FFT für die Zeit-Frequenz-Transformation, um zeitdiskrete Audiosignale in den Frequenzbereich zu transformieren, wie es bei modernen Codierern üblich ist. An dieser Stelle sei jedoch auf die vorher gemachten Anmerkungen hingewiesen, daß die MDCT im Gegensatz zur Fourier-Transformation nicht exakt energieerhaltend ist.

Die spektrale Energie einer Untergruppe ist somit die Grundlage dafür, eine Vorlage für Ersatzdaten zu bilden. Die Ersatzdaten sollen ein "spektral-durchschnittliches" Spektrum im Sinne der Kurzzeitstatistik aufweisen. "Spektral-durchschnittlich" bedeutet, daß ein Teil eines solchen Signals, wenn er nach dem Verfahren der vorliegenden Erfindung ersetzt wird, nicht besonders auffallen wird, d. h. daß die Ersetzung verschleiert ist.

Aus Einfachheitsgründen findet die nachfolgende Darstellung der vorliegenden Erfindung anhand eines blockorientierten Verfahrens dar, wie es bei den meisten modernen Audiocodierern der Fall ist. Es sei jedoch darauf hingewiesen, daß die vorliegende Erfindung nicht auf ein blockorientiertes Verfahren begrenzt ist. Voraussetzung für das Verfahren ist, daß Informationen über die spektrale Zusammensetzung des Signales erhalten werden können, um aus denselben die spektrale Energie pro Untergruppe zu berechnen. (Dies ist naturgemäß bei blockorientierten Transformationscodecs besonders einfach.)

Zur Ermittlung der Vorlage, d. h. der Kurzzeitstatistik, für Ersatzdaten werden in der Vergangenheit empfangene (intakte) Daten verwendet. Prinzipiell würde es auch möglich sein, nach Einfügen einer Verzögerung in den Signalpfad "zukünftige" Daten nach einem Fehler zu verwenden und eine Interpolation durchzuführen. Der Nachteil dabei besteht jedoch in der bereits erwähnten Verzögerung. Das Verfahren der vorliegenden Erfindung wendet jedoch keine Interpolation sondern eine Prädiktion an. Von Prädiktion kann gesprochen werden, da das Ergebnis dieser Operation immer ein zeitlich später liegenden Spektrum ist, das aus zeitlich früheren Daten abgeleitet wird. Es werden also immer Audiodaten vor Auftreten eines Fehlers, d. h. intakte Audiodaten, verwendet, um im Falle eines auftretenden Fehlers künstlich erzeugte Ersatzdaten statt fehlerhafter Daten bzw. statt nicht vorhandener Daten einzufügen, um den Fehler zu verschleiern. Trotzdem sei darauf hingewiesen, daß der Ausdruck "Prädiktion" in der Literatur meist enger ausgelegt wird. Das Bilden einer Vorlage für Ersatzdaten aufgrund der für die Untergruppe der intakten Audiodaten berechneten spektralen Energie kann mehr oder weniger aufwendig und damit auch mehr oder weniger genau gestaltet sein.

Für die nachfolgend dargelegten einzelnen Verfahren seien zuerst folgende Konventionen festgelegt. So bedeutet $X_i$ das Kurzzeitspektrum, d. h. den Vektor aus Kurzzeitspektralkomponenten, eines Blocks i. $E_i(f)$ stellt die spektrale Energie einer Untergruppe der Mittenfrequenz f im Block i dar. Dabei sei festgehalten, daß i = 0 den zu prädizierenden Block, d. h. den Block von Ersatzdaten darstellt, während negative i die gespeicherten Blöcke der intakten Audiodaten darstellen, und N der Anzahl der gespeicherten Blöcke entspricht. $E_V(f)$ möge für die durch die Vorlage in der Untergruppe der Mittenfrequenz f geforderte Energie stehen.

Aufsteigend sortiert nach der Komplexität zur Berechnung kommen folgende Verfahren zum Bilden einer Vorlage für Ersatzdaten in Frage:

1. Die spektralen Energien pro Untergruppe des zuletzt empfangenen Blocks werden direkt als Vorlage für den fehlenden Block verwendet. Dies kommt in folgender Gleichung zum Ausdruck:

$$E_V = E_{-1}$$

2. Die Vorlage entsteht als lineare Kombination von Potenzen der spektralen Energien entsprechender Untergruppen vergangener Blöcke:

$$E_V(f) = \sum_{i=-1}^{-N} a_i E_i(f)^{b_i}$$

$a_i$ sind konstante Koeffizienten zur linearen Kombination, während $b_i$ Exponenten zur Gewichtung der einzelnen spektralen Energien sind. Der hier wiederum einfachste Fall ist die Mittelung, welche sich durch folgende Koeffizientenwerte darstellen läßt:

$$a_i = 1/N \text{ und } b_i = 1.$$

3. Die Vorlage für Ersatzdaten kann auch durch Medianbildung über vergangene Energien erhalten werden. Dies sei durch folgende Gleichung dargestellt:

$$E_V(f) = \text{median } \{E_i(f) , i = -1...-N\}$$

Bei der Medianbildung könnte alternativ auch das kleinste, das zweitkleinste, ...., das zweitgrößte oder das größte Element aus den $E_i(f)$ verwendet werden.

4. Die Vorlage für die Ersatzdaten aufgrund der für die Untergruppe der intakten Audiodaten berechneten spektralen Energie kann jedoch auch mittels einer linearen adaptiven Prädiktion berechnet werden. Dies entspricht der im zweiten Fall dargelegten Gleichung, welche jedoch nun zeitabhängige Koeffizienten $a_i(t)$ haben muß. Für diesen Fall können auch in der Zukunft liegende Energien berechnet werden. Eine lineare adaptive Prädiktion zum Bilden der Vorlage für Ersatzdaten ist dann besonders vorteilhaft, wenn mehr als ein Block Daten im Datenstrom fehlen bzw. ersetzt werden müssen.

An dieser Stelle sei angemerkt, daß die vorstehende Liste zum Berechnen einer Vorlage für Ersatzdaten keinen Anspruch auf Vollständigkeit erhebt. Wichtig ist nur, daß die Vorlage für die Ersatzdaten einer Untergruppe aus spektralen Energien einer bestimmten Anzahl von vorausgehenden entsprechenden Untergruppen intakter Audiodaten erhalten wird.

Nachdem nun eine Vorlage für Ersatzdaten aufgrund der für die Untergruppe der intakten Audiodaten berechneten spektralen Energie gebildet worden ist, besteht schließlich der letzte Schritt des Verfahrens darin, eben die Ersatzdaten zu erzeugen, die anstelle von fehlerhaften oder nicht vorhandenen Audiodaten in den Audiodatenstrom eingesetzt bzw. substituiert werden sollen.

Es sollen Ersatzdaten erzeugt werden, die die gleiche spektrale Energie pro Untergruppe wie die Vorlage für die Ersatzdaten aufweisen sollen. Das grundsätzliche Verfahren besteht also darin, fehlerhafte bzw. nicht vorhandene Audiodaten, welche letztendlich Spektralkomponenten sein werden, durch künstlich erzeugte Spektralkomponenten zu ersetzen. Die Randbedingung ist also, daß die künstlich erzeugten Spektralkomponenten in einer Untergruppe zusammen dieselbe spektrale Energie aufweisen, die durch die Vorlage gegeben ist. Dafür existieren verschiedene Möglichkeiten. Es können beispielsweise alle Spektralwerte in einer Untergruppe gleichgesetzt werden, wobei die Größe der Spektralwerte oder Frequenzlinien dadurch gegeben ist, daß die spektrale Energie derselben der entsprechenden spektralen Energie der Vorlage entspricht.

Eine weitere Möglichkeit könnte darin bestehen, von vorneherein eine bestimmte Gewichtung festzulegen, welche darin bestehen könnte, Spektralwerte am Rand einer Untergruppe eher zu dämpfen und Spektralwerte in der Mitte einer Untergruppe hervorzuheben. Die entsprechenden Spektralwerte zusammen müssen jedoch dieselbe spektrale Energie wie eine entsprechende Untergruppe der Vorlage haben.

Das bevorzugte Verfahren zum Erzeugen von Ersatzdaten besteht jedoch darin, alle Spektralkomponenten innerhalb einer Untergruppe auf gleichverteilte Zufallswerte X(f) zwischen -1 und +1 zu setzen, und nachträglich eine Skalierung bzw. Normierung durchzuführen, bei der das eben erzeugte Signal im Pegel so angehoben/abgeschwächt wird, daß es innerhalb jeder Untergruppe die durch die Vorlage geforderte spektrale Energie besitzt.

Hierzu muß nach der Erzeugung des Zufallssignals X jede Linie X(f), welche per Definition einen Wert von zwischen -1 und +1 haben wird, innerhalb der entsprechenden Untergruppe mit folgendem Quotienten, der auch als Normierungsfaktor a bezeichnet wird, multipliziert werden:

$$\alpha = \sqrt{E_V(f_k)} / \sqrt{\Sigma X(f)^2};$$

$f \in$ Untergruppe der Mittenfrequenz $f_k$

$E_V(f_k)$ stellt hier die spektrale Energie in der Vorlage innerhalb einer Untergruppe k der Mittenfrequenz $f_k$ dar. $E_V(f_k)$ stellt also die Vorlage für die Untergruppe k mit der Mittenfrequenz $f_k$ dar.

Zur Vereinfachung der vorherigen Vorschrift, um auf die Summation im Nenner verzichten zu können, kann auch ein Zufallssignal erzeugt werden, welches zwischen +P und -P gleichverteilte Werte enthält, wobei P folgendem Wert genügen muß:

$$P = \sqrt{3E_V(f_k)}$$

Die Energie dieses Signals liegt dann mit hoher Wahrscheinlichkeit nahe bei der geforderten Energie $E_V(f_k)$. Dies gilt sicherlich bei Untergruppen, die eine größere (etwa 10) Anzahl von Frequenzlinien enthalten. Dies liegt daran, daß das Quadratmittel aus gleichverteilten Werten zwischen -1 und +1 gleich 1/3 ist.

Die nun erzeugten Ersatzdaten bzw. Spektralkomponenten für die Untergruppe werden von einem Decodierer genauso verarbeitet wie fehlerfreie Daten bzw. Spektralwerte. Aufgrund der Tatsache, daß nun die spektralen Energien der Untergruppen in den künstlich erzeugten Daten den spektralen Energien der Untergruppen im letzten intakten Block entsprechen oder aus den spektralen Energien von Untergruppen mehrerer vorausgehender Blöcke abgeleitet sind, wird der Block mit künstlich erzeugten Ersatzdaten bzw. die Blöcke mit künstlich erzeugten Ersatzdaten bei einigermaßen gleichverteilter Signalstatistik des Audiosignals unhörbar sein. Ein Fehler wird also verschleiert sein.

Bei dem erfindungsgemäßen Verfahren zum Verschleiern von Fehlern in einem Audiodatenstrom können jedoch instationäre Signale problematisch sein, da dann als Basis der Substitution möglicherweise ein Block mit für das Signal atypischer Statistik verwendet wird. Um zu verhindern, daß ein Block mit atypischer Statistik, auf den unmittelbar ein fehlerhafter Block folgt, das Bilden einer Vorlage für Ersatzdaten für den fehlerhaften Block dominiert, wodurch hörbare Fehler eingeführt werden könnten, kann es günstig sein, nicht nur den letzten intakten Block, sondern mehrere zuletzt vorhandene intakte Blöcke zu speichern und dann für eine eben genannte Prädiktion zu verwenden, um eine Vorlage für Ersatzdaten zu erhalten, die die größere Tendenz des Signalverlauf 5 bzw. der Signalstatistik und nicht nur die Statistik bzw. den Verlauf eines Blocks berücksichtigt.

Enthält das ungestörte oder intakte Signal oder der ungestörte oder intakte Audiodatenstrom eine prominente oder herausragende Spektralkomponente, die nahe am Rand einer Untergruppe liegt, so wird ein durch das eben beschriebene Verfahren erzeugtes innerhalb der Untergruppe gleichverteiltes ("weisses") Rauschen mit einer anderen Tonhöhe, nämlich der Mittenfrequenz der Untergruppe, empfunden. Um diesen Effekt zu vermeiden, sollten die Untergruppen in Frequenzbereichen, in denen das Ohr auf solche Tonhöhenschwankungen empfindlich ist, schmal gewählt werden, eventuell nur eine Frequenzlinie breit. Im letzten Fall vereinfacht sich das Verfahren, da - statt mit dem Betragsquadrat der Spektralkomponente der Vorlage zu rechnen - direkt die Spektralkomponente der Vorlage mit einer aus (+1,-1) zufällig gewählten Zahl multipliziert werden kann.

**Patentansprüche**

1. Verfahren zum Verschleiern von Fehlern in einem Audiodatenstrom mit folgenden Schritten:

    Erfassen des Auftretens eines Fehlers in einem Audiodatenstrom, wobei Audiodaten vor Auftreten des Fehlers intakte Audiodaten sind;

    Berechnen einer spektralen Energie einer Untergruppe der intakten Audiodaten;

    Bilden einer Vorlage für Ersatzdaten aufgrund der für die Untergruppe der intakten Audiodaten berechneten spektralen Energie; und

    Erzeugen von Ersatzdaten für fehlerhafte oder nicht vorhandene Audiodaten, die der Untergruppe entsprechen, aufgrund der Vorlage.

2. Verfahren nach Anspruch 1,

    bei dem der Audiodatenstrom aufeinanderfolgende Datenblöcke aufweist, wobei ein Datenblock Audiodaten aufweist, die einer bestimmten zeitlichen Blockdauer entsprechen;

    bei dem bei Auftreten eines fehlerhaften Datenblocks die spektralen Energien für jede Untergruppe des letzten intakten Datenblocks berechnet werden; und

    bei dem die Ersatzdaten für jede Untergruppe des fehlerhaften Datenblocks die spektralen Energien der entsprechenden Untergruppe des letzten intakten Datenblocks aufweisen.

3. Verfahren nach Anspruch 1,

    bei dem der Audiodatenstrom aufeinanderfolgende Datenblöcke aufweist, wobei ein Datenblock Audiodaten aufweist, die einer bestimmten zeitlichen Blockdauer entsprechen;

bei dem bei Auftreten eines fehlerhaften Datenblocks die spektralen Energien für entsprechende Untergruppen von zumindest zwei vorausgehenden intakten Datenblöcken berechnet werden; und

bei dem die Ersatzdaten für jede Untergruppe des fehlerhaften Datenblocks mittels Prädiktion aus den entsprechenden Untergruppen der zumindest zwei vorausgehenden intakten Datenblöcke ermittelt werden.

4. Verfahren nach einem der vorhergehenden Ansprüche, bei dem die spektralen Energien pro Untergruppe der Vorlage das Ergebnis einer linearen Kombination aus Potenzen der spektralen Energien entsprechender Untergruppen der vorausgehenden intakten Datenblöcke darstellen.

5. Verfahren nach einem der Ansprüche 1 bis 3, bei dem die spektralen Energien pro Untergruppe der Vorlage das Ergebnis einer Mittelung über die spektralen Energien entsprechender Untergruppen der vorausgehenden intakten Datenblöcke darstellen.

6. Verfahren gemäß einem der Ansprüche 1 bis 3, bei dem die spektralen Energien pro Untergruppe der Vorlage durch Medianbildung über die spektralen Energien entsprechender Untergruppen der vorausgehenden intakten Datenblöcke entstehen.

7. Verfahren gemäß einem der Ansprüche 1 bis 3, bei dem die spektralen Energien pro Untergruppe der Vorlage durch eine lineare adaptive Prädiktion über die spektralen Energien entsprechender Untergruppen der vorausgehenden intakten Datenblöcke entstehen.

8. Verfahren gemäß einem der vorhergehenden Ansprüche, bei dem der Schritt des Erzeugens von Ersatzdaten folgende Schritte aufweist:

Einstellen von Audiodaten innerhalb einer Untergruppe auf gleichverteilte Zufallswerte zwischen -1 und +1; und

Skalieren der eingestellten Audiodaten, derart, daß die spektrale Energie der eingestellten Audiodaten der Untergruppe gleich der Vorlage für die Ersatzdaten für die Untergruppe der intakten Audiodaten ist.

9. Verfahren gemäß einem der vorhergehenden Ansprüche, bei dem die Daten des Audiodatenstroms bereits im Frequenzbereich vorliegen.

10. Verfahren gemäß einem der vorhergehenden Ansprüche, bei dem vor dem Erfassen des Auftretens eines Fehlers in einem Audiodatenstrom folgende Schritte ausgeführt werden:

Empfangen des Audiodatenstroms; und

Speichern zumindest der zeitlich zuletzt empfangenen Daten des Audiodatenstroms in der Reihenfolge, die durch den Audiodatenstrom vorgegeben ist.

**Claims**

1. Method for concealing errors in an audio data stream, comprising the following steps:

detecting the occurrence of an error in an audio data stream, the audio data prior to the occurrence of the error being intact audio data;

calculating a spectral energy of a subgroup of the intact audio data;

forming a pattern for substitute data on the basis of the spectral energy calculated for the subgroup of the intact audio data; and

creating substitute data for erroneous or missing audio data which correspond to the subgroup on the basis of the pattern.

2. Method according to claim 1,

wherein the audio data stream comprises successive data blocks, a data block comprising audio data which correspond to a certain temporal block duration;

wherein the spectral energies for each subgroup of the last intact data block are calculated when an erroneous data block is encountered; and

wherein the substitute data for each subgroup of the erroneous data block comprise the spectral energies of the corresponding subgroup of the last intact data block.

3. Method according to claim 1,

wherein the audio data stream comprises successive data blocks, a data block comprising audio data which correspond to a certain temporal block duration;

wherein the spectral energies for corresponding subgroups of at least two preceding intact data blocks are calculated when an erroneous data block is encountered; and

wherein the substitute data for each subgroup of the erroneous data block are ascertained by prediction from the corresponding subgroups of at least the two preceding intact data blocks.

4. Method according to one of the preceding claims, wherein the spectral energies per subgroup of the pattern represent the result of a linear combination of powers of the spectral energies of corresponding subgroups of the preceding intact data blocks.

5. Method according to one of the claims 1 to 3, wherein the spectral energies per subgroup of the pattern represent the result of an averaging over the spectral energies of corresponding subgroups of the preceding intact data blocks.

6. Method according to one of the claims 1 to 3, wherein the spectral energies per subgroup of the pattern result from forming the median over the spectral energies of corresponding subgroups of the preceding intact data blocks.

7. Method according to one of the claims 1 to 3, wherein the spectral energies per subgroup of the pattern result from a linear adaptive prediction over the spectral energies of corresponding subgroups of the preceding intact data blocks.

8. Method according to one of the preceding claims, wherein the step of creating substitute data comprises the following steps:

setting the audio data within a subgroup to uniformly distributed random values between -1 and +1; and

scaling the set audio data in such a way that the spectral energy of the set audio data of the subgroup is the same as the pattern for the substitute data for the subgroup of the intact audio data.

9. Method according to one of the preceding claims, wherein the data of the audio data stream already lie in the frequency domain.

10. Method according to one of the preceding claims, wherein the following steps are performed prior to detecting the occurrence of an error in an audio data stream:

receiving the audio data stream; and

storing, in the sequence specified by the audio data stream, at least the data of the audio data stream which were received last chronologically.

## Revendications

1. Procédé de masquage d'erreurs dans un courant de données audio, aux étapes suivantes consistant à :

capter la production d'une erreur dans un courant de données audio, les données audio étant, avant la production de l'erreur, des données audio intactes ;
calculer une énergie spectrale d'un sous-groupe des données audio intactes ;
former une présentation de données de remplacement sur base de l'énergie spectrale calculée pour le sous-groupe des données audio intactes ; et
générer des données de remplacement de données audio défectueuses ou non présentes correspondant au sous-groupe, sur base de la présentation.

2. Procédé suivant la revendication 1,

dans lequel le courant de données audio présente des blocs de données successifs, un bloc de données présentant des données audio correspondant à une durée de bloc dans le temps déterminée ;
dans lequel sont calculées, lors de la production d'un bloc de données défectueux, les énergies spectrales pour chaque sous-groupe du dernier bloc de données intact ; et
dans lequel les données de remplacement pour chaque sous-groupe du bloc de données défectueux présentent les énergies spectrales du sous-groupe correspondant du dernier bloc de données intact.

3. Procédé suivant la revendication 1,

dans lequel le courant de données audio présente des blocs de données successifs, un bloc de données présentant des données audio correspondant à une durée de bloc dans le temps déterminée ;
dans lequel sont calculées, lors de la production d'un bloc de données défectueux, les énergies spectrales pour des sous-groupes correspondants d'au moins deux blocs de données intacts précédents ; et
dans lequel les données de remplacement pour chaque sous-groupe du bloc de données défectueux sont déterminées par prédiction à partir des sous-groupes correspondants des au moins deux blocs de données intacts précédents.

4.  Procédé suivant l'une des revendications précédentes, dans lequel les énergies spectrales par sous-groupe de la présentation représentent le résultat d'une combinaison linéaire de puissances des énergies spectrales de sous-groupes correspondants des blocs de données intacts précédents.

5.  Procédé suivant l'une des revendications 1 à 3, dans lequel les énergies spectrales par sous-groupe de la présentation représentent le résultat d'une détermination de la moyenne sur base des énergies spectrales de sous-groupes correspondants des blocs de données intacts précédents.

6.  Procédé suivant l'une des revendications 1 à 3, dans lequel les énergies spectrales par sous-groupe de la présentation sont obtenues par la formation d'une médiane sur base des énergies spectrales de sous-groupes correspondants des blocs de données intacts précédents.

7.  Procédé suivant l'une des revendications 1 à 3, dans lequel les énergies spectrales par sous-groupe de la présentation sont obtenues par une prédiction adaptative linéaire sur base des énergies spectrales de sous-groupes correspondants des blocs de données intacts précédents.

8.  Procédé suivant l'une des revendications précédentes, dans lequel l'étape de génération de données de remplacement présente les étapes suivantes consistant à :

    régler les données audio dans un sous-groupe à des valeurs arbitraires réparties uniformément entre -1 et +1 ; et
    échelonner les données audio réglées de telle sorte que l'énergie spectrale des données audio réglées du sous-groupe soit égale à la présentation pour les données de remplacement pour le sous-groupe des données audio intactes.

9.  Procédé suivant l'une des revendications précédentes, dans lequel les données du courant de données audio sont déjà présentes dans la plage de fréquences.

10. Procédé suivant l'une des revendications précédentes, dans lequel sont réalisées, avant de capter la production d'une erreur dans un courant de données audio, les étapes suivantes consistant à :

recevoir le courant de données audio ; et
mémoriser au moins les dernières données reçues dans le temps du courant de données audio, dans l'ordre prédéterminé par le courant de données audio.